# EUROPÄISCHE PATENTSCHRIFT

(11) **EP 2 656 034 B1**
(45) Veröffentlichungstag und Bekanntmachung des Hinweises auf die Patenterteilung: **12.07.2017**
(21) Anmeldenummer: 11796687.9
(22) Anmeldetag: 13.12.2011
(51) Int. Cl.: G01K 7/02, G01K 13/00, F24C 7/08

(54) **KERNTEMPERATURFÜHLER**
CORE TEMPERATURE SENSOR
THERMOMÈTRE POUR SONDER UNE TEMPÉRATURE CENTRALE

(30) Priorität: 20.12.2010 DE 102010063474
(43) Veröffentlichungstag der Anmeldung: 30.10.2013
(73) Patentinhaber: BSH Hausgeräte GmbH, 81739 München (DE)
(72) Erfinder: BAUER, Hans-Jürgen, 83278 Traunstein (DE); NADLER, Robert, 83308 Trostberg (DE)
(86) Internationale Anmeldenummer: PCT/EP2011/072512
(87) Internationale Veröffentlichungsnummer: WO 2012/084581

(56) Entgegenhaltungen:
- DE-A1- 10 061 821
- JP-A- 9 152 379
- US-A1- 2008 043 809

## Beschreibung

Die Erfindung betrifft einen Kerntemperaturfühler mit mindestens einem ersten Thermospannungselement und einem zweiten Thermospannungselement.

Zum automatischen Erkennen einer Beendigung eines Garprozesses eines Garguts (insbesondere eines Fleischstücks) in einem Gargerät wird häufig ein Kerntemperaturfühler eingesetzt. Mittels des Kerntemperaturfühlers wird eine Kerntemperatur eines Garguts abgefühlt. Sobald die Kerntemperatur einen einstellbaren Sollwert erreicht hat, wird dies von dem Gargerät erkannt. Der Kerntemperaturfühler weist typischerweise ein Rohr auf, an dessen Spitze sich ein Temperatursensor befindet. Ein Nutzer steckt vor Beginn des Garprozesses den Kerntemperaturfühler mit seiner Spitze zuerst in das zu überwachende Gargut. Dabei muss der Nutzer darauf achten, dass sich die Spitze möglichst in der Mitte des Garguts befindet, damit keine Fehlmessung auftritt, z.B. bei einer durchgesteckten Spitze eine Messung einer Temperatur eines Garraums. Dadurch würde eine zu hohe Temperatur gemessen und das Gargerät würde melden, dass der Sollwert erreicht sei, obwohl die Kerntemperatur des Garguts noch nicht den Sollwert erreicht hat. Das Gargut würde also nicht ausreichend gegart, was außer einem unbefriedigenden Garergebnis auch gesundheitlich negative Folgen haben könnte, z.B. indem vorhandene Krankheitskeime nicht oder nicht vollständig abgetötet werden.

Es ist ferner ein so genannter Mehrpunkt-Kerntemperaturfühler bekannt, an dessen Rohr fünf Thermoelemente äquidistant angeordnet sind. Zusätzlich befindet sich ein Thermoelement in einem Griff des Kerntemperaturfühlers. Durch eine Auswertung der Messwerte aller fünf Thermoelemente und durch einen Vergleich mit einer Temperatur des Thermoelements in dem Griff kann ermittelt werden, ob der Kerntemperaturfühler richtig gesteckt ist. Dabei werden alle positiven Anschlüsse der Thermoelemente sowie eine gemeinsame negative Leitung über ein Kabel zur einer Elektronik des Gargeräts geführt. Diese Anordnung ist technisch aufwendig und teuer, da sechs Thermoelemente verbaut und abgefühlt werden müssen.

DE 100 61 821 A1 offenbart eine individuelle Bestimmung von Temperaturwerten aus Messsignalen einzelner Temperatursensoren. Dem schließt sich zur Bestimmung einer Fehlstechung eines Kerntemperaturfühlers eine logische Verknüpfung der Temperaturwerte an.

JP 9 152379 A offenbart eine allgemeine Temperaturmessvorrichtung mit elektrisch gegenpoligen verschalteten Thermoelementen, wobei eine resultierende elektrische Spannungsdifferenz zur Bestimmung eines Messfehlers oder einer Messtoleranz herangezogen wird.

Die **Aufgabe** der Erfindung besteht darin, die vorstehend genannten Nachteile zu vermeiden und insbesondere eine zuverlässige und preiswerte Möglichkeit zum Abfühlen einer Kerntemperatur anzugeben.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Kerntemperaturfühler für Gargut vorgeschlagen, aufweisend mindestens ein erstes Thermospannungselement und ein zweites Thermospannungselement, wobei das erste Thermospannungselement und das zweite Thermospannungselement elektrisch gegenpolig und in Reihe verschaltet sind und aus einer relativen Höhe einer elektrischen Spannungsdifferenz zwischen dem ersten Thermospannungselement und dem zweiten Thermospannungselement eine Fehlpositionierung des Kerntemperaturfühlers erkennbar ist.

So kann auf eine einfache Weise ermittelt werden, ob der Kerntemperaturfühler richtig in ein Gargut eingesteckt worden ist. Denn falls der Kerntemperaturfühler falsch eingesteckt worden ist, beispielsweise nicht weit genug oder zu weit eingesteckt worden ist, kann der Fall eintreten, dass sich die beiden Thermospannungselemente außerhalb des Garguts befinden und somit im Wesentlichen eine gleiche Temperatur des Garraums abfühlen. Dann wird die Differenztemperatur einen geringen oder vernachlässigbar kleinen Wert annehmen. Befindet sich hingegen eines der Thermospannungselemente in dem Gargut und das andere Thermospannungselement außerhalb des Garguts, wird aufgrund der im Vergleich zu dem Garraum geringeren Temperatur in dem Gargut eine signifikant höhere Temperaturdifferenz gemessen. Anhand einer relativen Höhe der Temperaturdifferenz kann also eine Fehlpositionierung oder Fehleinführung des Kerntemperaturfühlers in das Gargut auf einfache und preiswerte Weise erkannt und korrigiert werden.

Bei der gegenpoligen Verschaltung können zwei gleiche Pole (Pluspol oder Minuspol) direkt miteinander elektrisch verbunden sein. Die von den beiden Thermospannungselementen erzeugten temperaturabhängigen Spannungen sind somit entgegengerichtet. Für den Fall einer gleichen Temperatur an den Thermospannungselementen, welche einem fehleingesetzten Kerntemperaturfühler entspricht, heben sich die Spannungen zumindest größtenteils auf, und eine Spannungsdifferenz ist vergleichsweise gering oder sogar im Wesentlichen Null. Für den Fall einer signifikant unterschiedlichen Temperatur an den Thermospannungselementen, welche einem korrekt eingesetzten Kerntemperaturfühler entspricht, ergibt sich eine wesentlich höhere Spannungsdifferenz. Diese Weiterbildung ist besonders einfach implementierbar.

Eine Weiterbildung davon ist es, dass das erste Thermospannungselement und das zweite Thermospannungselement so verschaltet sind, dass eine absolute Temperatur ermittelbar ist. So kann der Kerntemperaturfühler beispielsweise auch für eine Temperaturregelung verwendet werden.

Zur Lösung der Aufgabe wird ferner ein Kerntemperaturfühler vorgeschlagen, bei dem das erste Thermospannungselement und das zweite Thermospannungselement elektrisch antiparallel geschaltet sind, d.h., dass unterschiedliche Pole der parallel geschalteten Thermospannungselemente direkt miteinander verbunden sind.

Der Kerntemperaturfühler ist dazu vorgesehen eine Temperatur und/oder eine daraus abgeleitete Größe im Inneren eines Garguts zu erfassen, vorzugsweise in einem Kern des Garguts.

Insbesondere kann der Kerntemperaturfühler genau ein erstes Thermospannungselement und ein zweites Thermospannungselement aufweisen, was eine besonders preiswerte Ausgestaltung erlaubt.

Bevorzugt weisen die Thermospannungselemente einen gleichen oder einen ähnlichen Aufbau auf. Insbesondere zeigen die Thermospannungselemente eine im Wesentlichen gleiche oder ähnliche thermische Eigenschaft, d.h. stellen in etwa die gleiche Spannung abhängig von der Temperatur bereit.

Das Thermospannungselement kann jegliches Element oder Einrichtung sein, welches ein temperaturabhängiges elektrisches Signal, insbesondere eine temperaturabhängige Spannung oder Strom, bereitstellt. Es ist eine Weiterbildung, dass das Thermospannungselement ein Thermoelement ist. Beispielsweise kann das Thermoelement mit einer Paarung aus Nickel-Chrom/Nickel, Eisen-Kupfer/Nickel, Platin-Rhodium/Platin, Iridium-Iridium/Rhodium, Wolfram-Rhenium/Wolfram-Rhenium, Gold/Eisen-Nickel/Chrom und/oder Gold/Eisen-Gold/Silber ausgestaltet sein. Es ist noch eine Weiterbildung, dass das Thermospannungselement ein thermoelektrischer Generator ist.

Unterschiedliche Thermospannungselemente können abhängig von der Temperatur gleiche oder unterschiedliche Spannungen bereitstellen.

Auch ist es eine Weiterbildung, dass zumindest eine Temperaturdifferenz zwischen mindestens zwei Thermospannungselementen aus einer elektrischen Spannungsdifferenz zwischen ihnen ermittelbar ist oder ermittelt wird. Dies ist besonders einfach durchführbar.

Ferner ist es eine Weiterbildung, dass zumindest die elektrische Spannungsdifferenz mit einer einstellbaren Vergleichsspannung vergleichbar ist. Die Vergleichsspannung dient als ein Schwellwert für die Spannungsdifferenz, bei deren Erreichen oder Überschreiten ein korrekt eingeführter Kerntemperaturfühler angenommen wird bzw. bei deren Erreichen oder Unterschreiten ein fehleingesetzter Kerntemperaturfühler angenommen wird. Die Vergleichsspannung kann fest voreingestellt sein oder variabel einstellbar sein.

Eine nächste, alternative oder zusätzliche, Weiterbildung besteht darin, dass die Temperaturdifferenz zwischen dem ersten Thermospannungselement und dem zweiten Thermospannungselement aus einem durch das erste Thermospannungselement und/oder das zweite Thermospannungselement fließenden elektrischen Strom ermittelbar ist. Auch der elektrische Strom kann zum Bestimmen eines korrekt eingesetzten oder eines fehleingesetzten Kerntemperaturfühlers mit einem Vergleichswert oder Schwellwert herangezogen werden.

Eine nächste Weiterbildung besteht darin, dass den Thermospannungselementen zum Vergleich des elektrischen Differenzsignals (Differenzstrom oder Differenzspannung) ein Komparator nachgeschaltet ist. Dies ermöglicht eine besonders zuverlässige und preiswerte Ausgestaltung. Eine Ausgestaltung ist es, dass ein Eingang des Komparators an der Vergleichsspannung oder dem Referenzpotential anliegt und ein anderer Eingang des Komparators an den verschalteten Thermoelementen anliegt.

Insbesondere kann die Vergleichsspannung durch einen Spannungsteiler oder eine einstellbare Spannungsquelle bereitgestellt werden.

Eine Ausgestaltung ist es, dass der Komparator ein Operationsverstärker ist.

Auch kann ein Komparator mit einer (Schalt-)Hysterese (z.B. ein Schmitt-Trigger) eingesetzt werden, um ein Oszillieren um das Referenzpotenzial zu verhindern.

Alternativ kann ein Vergleich mit einem Vergleichswert oder Schwellwert in dem Gargerät durchgeführt werden. Der Kerntemperaturfühler ist dazu insbesondere drahtlos oder drahtgebunden mit dem Gargerät kommunikativ gekoppelt, um Werte eines von der Temperaturdifferenz abhängigen elektrischen Differenzsignals an das Gargerät zu übertragen. Der Vergleich kann insbesondere mittels einer Auswerteeinheit des Gargeräts durchgeführt werden. Die Auswerteeinheit kann insbesondere in eine zentrale Steuereinheit des Gargeräts integriert sein. Die Auswerteeinheit kann beispielsweise einen Mikroprozessor, einen ASIC, ein FPGA usw. umfassen.

Eine nächste Ausgestaltung ist es, dass das erste Thermospannungselement in einem Bereich eines Griffs des Kerntemperaturfühlers angeordnet ist und das zweite Thermospannungselement in einem Bereich einer Spitze des Kerntemperaturfühlers angeordnet ist. Da der Griff für alle praktisch relevanten Fälle nicht in das Gargut eingesteckt wird, liegt an dem ersten Thermospannungselement im Wesentlichen eine Garraumtemperatur an. Bei einem korrekt eingesteckten Kerntemperaturfühler befindet sich die Spitze in dem Gargut, bei einem fehleingesteckten Kerntemperaturfühler wird die Spitze als erstes wieder aus dem Gargut austreten. Somit stellt diese Ausgestaltung eine besonders zuverlässige Anordnung zum Identifizieren einer Fehleinführung oder Fehleinsteckung dar.

Die vorstehend genannte Aufgabe wird auch gelöst durch ein Verfahren zum Bestimmen einer Fehleinführung eines Kerntemperaturfühlers in ein Gargut, wobei die Fehleinführung mittels einer Temperaturdifferenz zwischen zwei Thermospannungselementen bestimmt wird. Das Verfahren ergibt die gleichen Vorteile wie die beschriebene Vorrichtung und kann auch analog ausgestaltet werden.

Die vorstehend genannte Aufgabe wird ferner gelöst durch ein Gargerät, welches zum Durchführen zumindest eines Teils des Verfahrens eingerichtet ist.

Ausführungsbeispiele der Erfindung werden nachfolgend anhand der Zeichnungen schematisch dargestellt und erläutert.

Es zeigen:
- Fig.1: eine Schaltskizze zweier gegenpolig und in Reihe geschalteter Thermospannungselemente mit einer resultierenden Differenzspannung;
- Fig.2: einen Kerntemperaturfühler mit zwei Thermospannungselementen;
- Fig.3: eine Schaltskizze zweier gegenpolig und in Reihe geschalteter Thermospannungselemente mit einem nachgeschalteten Komparator;
- Fig.4: eine Schaltskizze zweier antiparallel geschalteter Thermospannungselemente mit einer resultierenden Differenzspannung;
- Fig.5: eine Schaltskizze zweier gegenpolig und in Reihe geschalteter Thermospannungselemente mit einer zusätzlichen Mittelabzweigung;
- Fig.6: eine Schaltskizze zweier gegenpolig und in Reihe geschalteter Thermospannungselemente mit einem resultierenden Differenzstrom.

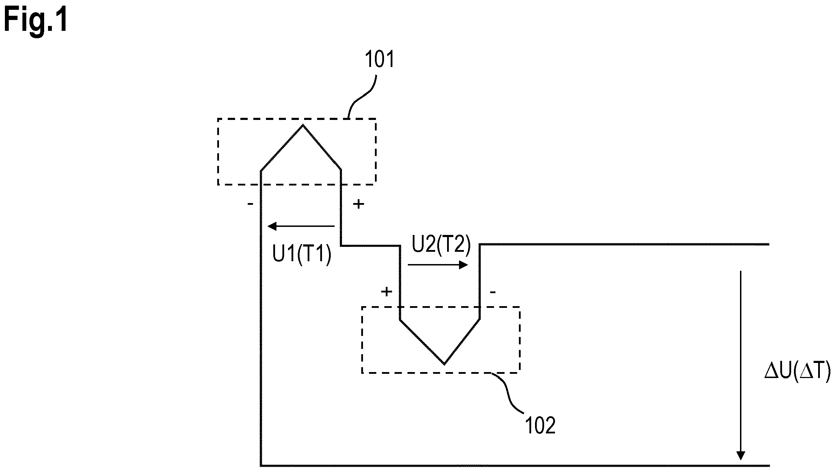

**Fig.1** zeigt eine Schaltskizze eines ersten Thermospannungselements in Form eines Thermoelements 101 und eines zweiten Thermospannungselements in Form eines baugleichen Thermoelements 102. Das erste Thermoelement 101 und das zweite Thermoelement 102 können jeweils eine temperaturabhängige Spannung U1 bzw. U2 erzeugen. Das erste Thermoelement 101 und das zweite Thermoelement 102 sind gegenpolig und in Reihe geschaltet, d.h., dass gleiche Pole, hier beispielhaft ihre positiven Pole, elektrisch unmittelbar miteinander verbunden sind. Über beide Thermoelemente 101, 102 ist folglich eine resultierende Differenzspannung ΔU der Größe |U1 - U2| abgreifbar. Befinden sich beide Thermoelemente 101 und 102 auf einer gleichen Temperatur T, folgt U1 = U2 und die resultierende Differenzspannung ΔU ist Null. Befinden sich beide Thermoelemente 101 und 102 auf einer unterschiedlichen Temperatur T1 bzw. T2, ist die resultierende Differenzspannung ΔU ungleich Null. Der Betrag der resultierenden Differenzspannung |ΔU| ist ein Maß für die Temperaturdifferenz |ΔT| = |T1-T2|.

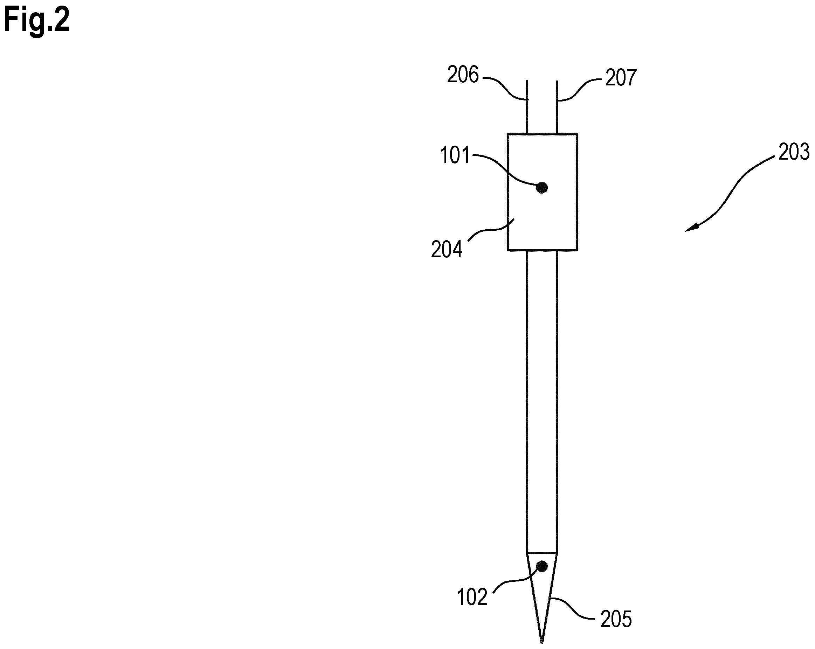

**Fig.2** zeigt einen Kerntemperaturfühler 203 mit dem ersten Thermoelement 101 in einem Griff 204 und dem zweiten Thermoelement 102 in einer Spitze 205. Bei einer nicht korrekten Positionierung des Kerntemperaturfühlers 203 kann beispielsweise die Spitze 205 durch das zu überwachende Gargut hindurchgesteckt sein, so dass sowohl die Spitze 205 als auch der Griff 204 eine Garraumtemperatur abfühlen, so dass die Differenzspannung ΔU Null ist oder nur einen geringen Wert annimmt. Bei einem korrekten Sitz des Kerntemperaturfühlers 203 mit der Spitze 205 in dem zu überwachenden Gargut ist eine Umgebungstemperatur an der Spitze 205 wesentlich geringer als an dem weiterhin dem Garraum direkt ausgesetzten Griff 204, so dass die Differenzspannung ΔU einen vergleichsweise hohen Wert annimmt.

Der Kerntemperaturfühler 203 ist über zwei elektrische Leitungen 206 und 207 bzw. eine entsprechende zweipolige elektrische Leitung mit einem Gargerät verbindbar.

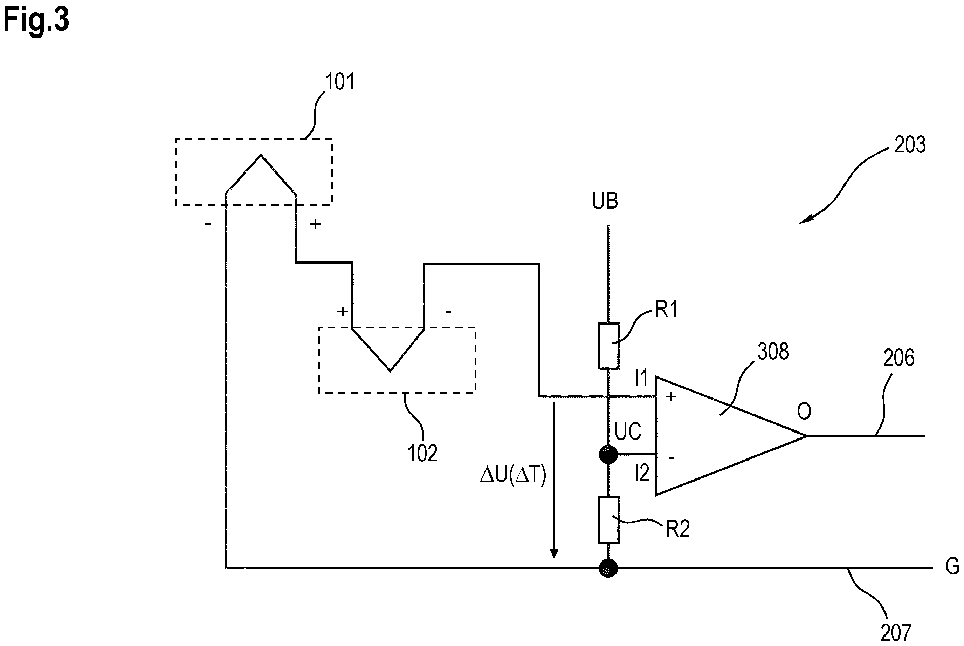

**Fig.3** zeigt eine Schaltskizze der zwei gegenpolig und in Reihe geschalteten Thermoelemente 101 und 102 des Kerntemperaturfühlers 203 wie in Fig.1 gezeigt, wobei den Thermoelementen 101 und 102 nun eine Vergleichseinheit oder Auswerteeinheit in Form eines als Komparator geschalteten Operationsverstärkers 308 nachgeschaltet ist. Ein erster Eingang I1 des Operationsverstärkers 308 ist mit dem zweiten Thermoelement 102 verbunden. Ein zweiter Eingang I2 des Operationsverstärkers 308 ist mit einem Mittelabgriff zwischen zwei in Reihe geschalteten ohmschen Widerständen R1 und R2 verbunden, wobei die Widerstände R1 und R2 einen Spannungsteiler bilden, der mit einer Referenzspannung UB versorgt wird. Durch den Spannungsteiler aus R1 und R2 wird eine Vergleichsspannung UC = R2 * UB / (R1 + R2) an dem zweiten Eingang I2 eingestellt. Die Thermoelemente 101, 102 und der Spannungsteiler R1, R2 sind beide mit einer gemeinsamen Masse G verbunden. Der Operationsverstärker 308 vergleicht, ob die Spannungsdifferenz ΔU der Thermoelemente 101, 102 beispielsweise größer als die Vergleichsspannung UC ist. Ist dies der Fall, ist der Kerntemperaturfühler 203 richtig eingesteckt und ein Ausgang O des Operationsverstärkers 308 ist beispielsweise auf einen hohen Pegel ("high") geschaltet. Falls nicht, ist der Kerntemperaturfühler 203 falsch eingesteckt und der Ausgang O des Operationsverstärkers 308 ist beispielsweise auf einen entsprechend niedrigen Pegel ("low") geschaltet.

Der Ausgang O des Operationsverstärkers 308 ist über die elektrische Leitung 206 und die Masse G ist über die elektrische Leitung 207 mit dem Gargerät verbunden. Das Gargerät kann anhand des Signals am Ausgang O des Operationsverstärkers 308 erkennen, ob der Kerntemperaturfühler 203 korrekt oder falsch in dem zu überwachenden Gargut eingesteckt ist. Ist der Kerntemperaturfühler 203 falsch eingesteckt, mag das Gargerät beispielsweise eine Ausführung eines Garprogramms verweigern und/oder ein akustisches oder optisches Signal ausgeben.

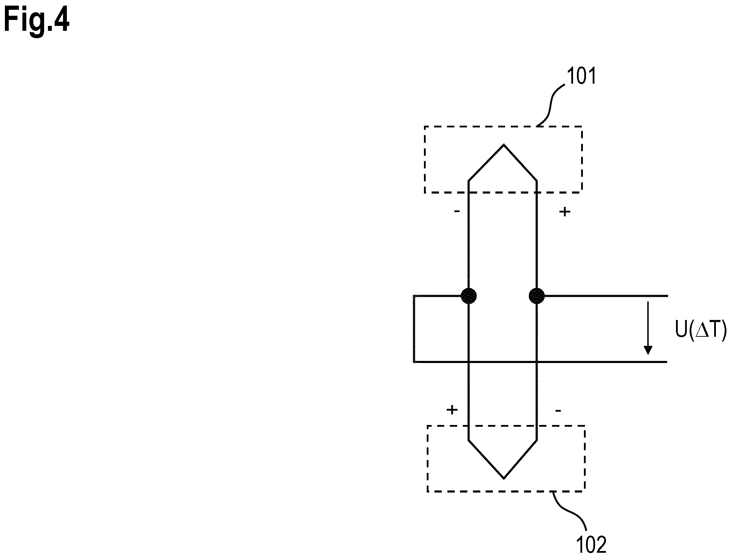

**Fig.4** zeigt eine Schaltskizze zweier antiparallel geschalteter Thermospannungselemente in Form von Thermoelementen 101 und 102 mit einer resultierenden Spannung U. Die Spannung U ist abhängig von einer Temperaturdifferenz ΔT zwischen den Thermoelementen 101 und 102. Die Spannung U kann analog zu dem in Fig.3 gezeigten Ausführungsbeispiel verwendet werden.

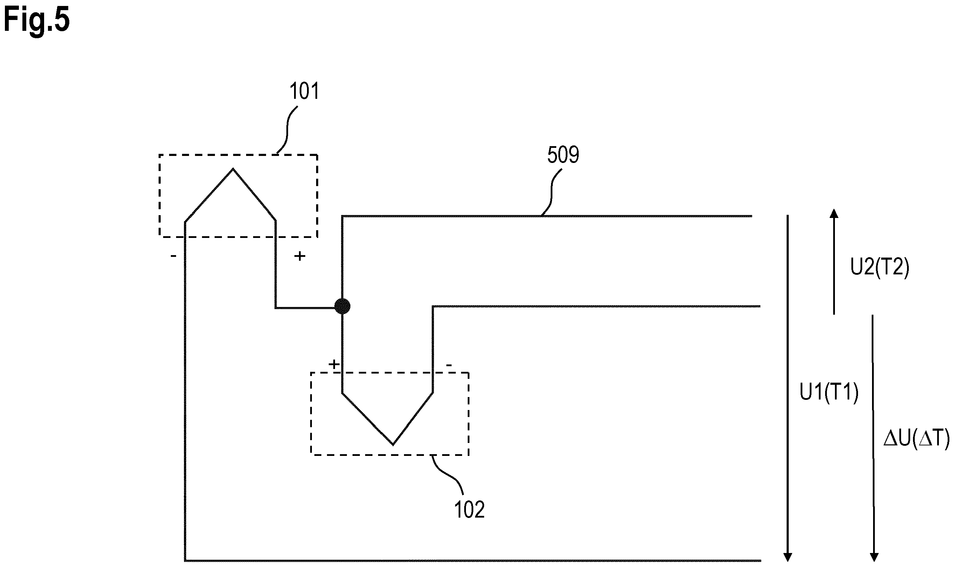

**Fig.5** zeigt eine Schaltskizze zweier gegenpolig und in Reihe geschalteter Thermospannungselemente in Form von Thermoelementen 101 und 102 ähnlich wie in Fig.1 mit einer zusätzlichen Mittelabzweigung 509. Zwischen dem negativen Pol des ersten Thermoelements 101 und der Mittelabzweigung 509 (also dem positiven Pol des ersten Thermoelements 101) kann die an dem ersten Thermoelement 101 unmittelbar anliegende Thermospannung U1 abgegriffen werden und so die Temperatur T1 an dem ersten Thermoelement 101, z.B. an dem Griff 204, ermittelt werden. Analog kann zwischen dem negativen Pol des zweiten Thermoelements 102 und der Mittelabzweigung 509 die an dem zweiten Thermoelement 102 unmittelbar anliegende Thermospannung U2 abgegriffen werden und so die Temperatur T2 an dem zweiten Thermoelement 102, z.B. an der Spitze des Kerntemperaturfühlers 205, ermittelt werden.

Zusätzlich zu der temperaturabhängigen Spannungsdifferenz können also auch die absoluten Temperaturen an den Thermoelementen ermittelt und geeignet von dem Gargerät (oder jedeweder nachgeschalteten Steuereinheit) ausgewertet werden.

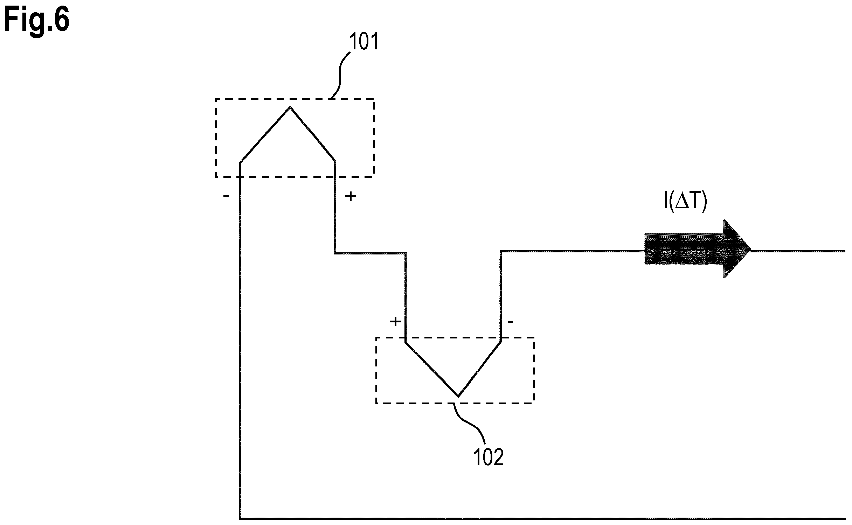

**Fig.6** zeigt eine Schaltskizze zweier gegenpolig und in Reihe geschalteter Thermospannungselemente in Form von Thermoelementen 101 und 102 ähnlich wie in Fig.1, wobei aber nun ein durch die Thermoelemente 101 und 102 fließender Strom I erfasst wird. Auch der Strom I ist ein Maß für eine Temperaturdifferenz ΔT zwischen den Thermoelementen 101 und 102. Wenn der Strom I nahe Null ist, liegt eine Fehlpositionierung vor, da die Spitze 205 und der Griff 204 eine nahezu gleiche Temperatur aufweisen. Der Strom I kann analog zu der Spannungsdifferenz ΔU ausgewertet werden.

Die gezeigten Ausführungsbeispiele weisen die Vorteile auf, dass eine Erkennung einer korrekten Verwendung eines Kerntemperaturfühlers sicher durch kostengünstige Komponenten erreichbar ist, nämlich im einfachsten Fall mittels zweier preiswerter Thermoelemente, einer Anschlussleitung mit nur zwei Adern o.ä. und einer einfach aufgebauten Auswerteeinheit.

Selbstverständlich ist die vorliegende Erfindung nicht auf die gezeigten Ausführungsbeispiele beschränkt.

So mag die Auswerteeinheit auch in dem Gargerät integriert sein. Der Kerntemperaturfühler kann in diesem Fall beispielsweise ein durch die Thermoelemente erzeugtes, temperaturabhängiges elektrisches Differenzsignal (Differenzspannung, Differenzstrom usw.) an das Gargerät weitergeben.

### Bezugszeichenliste

- 101: erstes Thermoelement
- 102: zweites Thermoelement
- 203: Kerntemperaturfühler
- 204: Griff
- 205: Spitze
- 206: elektrische Leitung
- 207: elektrische Leitung
- 308: Operationsverstärker
- 509: Mittelabzweigung
- I1: erster Eingang
- I2: zweiter Eingang
- G: Masse
- O: Ausgang
- R1: Widerstand / Spannungsteiler
- R2: Widerstand / Spannungsteiler
- U: Spannung
- UB: Referenzspannung
- UC: Vergleichsspannung
- U1: Spannung an dem ersten Thermoelement
- U2: Spannung an dem zweiten Thermoelement
- ΔU: Differenzspannung
- ΔT: Temperaturdifferenz
- T1: Temperatur an dem ersten Thermoelement
- T2: Temperatur an dem zweiten Thermoelement

## Patentansprüche

1. Kerntemperaturfühler (203) für Gargut, aufweisend mindestens ein erstes Thermospannungselement (102) und ein zweites Thermospannungselement (102), **dadurch gekennzeichnet, dass**
- das erste Thermospannungselement (101) und das zweite Thermospannungselement (102) elektrisch gegenpolig und in Reihe verschaltet sind und
- aus einer relativen Höhe einer elektrischen Spannungsdifferenz (ΔU) zwischen dem ersten Thermospannungselement (102) und dem zweiten Thermospannungselement (102) eine Fehlpositionierung des Kerntemperaturfühlers (203) erkennbar ist.

2. Kerntemperaturfühler (203) nach Anspruch 1, **dadurch gekennzeichnet, dass** das erste Thermospannungselement (102) und das zweite Thermospannungselement (102) so verschaltet sind, dass eine absolute Temperatur ermittelbar ist.

3. Kerntemperaturfühler (203) für Gargut, aufweisend mindestens ein erstes Thermospannungselement (102) und ein zweites Thermospannungselement (102), **dadurch gekennzeichnet, dass**
- das erste Thermospannungselement (101) und das zweite Thermospannungselement (102) elektrisch antiparallel verschaltet sind und
- aus einer relativen Höhe einer elektrischen Spannungsdifferenz (ΔU) zwischen dem ersten Thermospannungselement (102) und dem zweiten Thermospannungselement (102) eine Fehlpositionierung des Kerntemperaturfühlers (203) erkennbar ist.

4. Kerntemperaturfühler (203) nach einem der vorhergehenden Ansprüche, **dadurch gekennzeichnet, dass** zumindest die elektrische Spannungsdifferenz (ΔU) mit einer einstellbaren Vergleichsspannung (UC) vergleichbar ist.

5. Kerntemperaturfühler (203) nach einem der vorhergehenden Ansprüche, **dadurch gekennzeichnet, dass** die Temperaturdifferenz (ΔT) zwischen dem ersten Thermospannungselement (102) und dem zweiten Thermospannungselement (102) aus einem durch das erste Thermospannungselement (101) und/oder das zweite Thermospannungselement (102) fließenden elektrischen Strom ermittelbar ist.

6. Kerntemperaturfühler (203) nach einem der vorhergehenden Ansprüche, **dadurch gekennzeichnet, dass** den Thermospannungselementen (101, 102) ein Komparator (308) nachgeschaltet ist.

7. Kerntemperaturfühler (203) nach Anspruch 6, **dadurch gekennzeichnet, dass** der Komparator (308) ein Operationsverstärker ist.

8. Kerntemperaturfühler (203) nach einem der vorhergehenden Ansprüche, **dadurch gekennzeichnet, dass** das erste Thermospannungselement (101) in einem Bereich eines Griffs (204) des Kerntemperaturfühlers (203) angeordnet ist und das zweite Thermospannungselement (102) in einem Bereich einer Spitze (205) des Kerntemperaturfühlers (203) angeordnet ist.

## Claims

1. Core temperature sensor (203) for food to be cooked, having at least one first thermoelectric voltage element (102) and one second thermoelectric voltage element (102), **characterised in that**
- the first thermoelectric voltage element (101) and the second thermoelectric voltage element (102) are electrically interconnected with opposite poles and in series and
- an incorrect positioning of the core temperature sensor (203) can be detected from a relative level of an electrical voltage difference (ΔU) between the first thermoelectric voltage element (102) and the second thermoelectric voltage element (102).

2. Core temperature sensor (203) according to claim 1, **characterised in that** the first thermoelectric voltage element (102) and the second thermoelectric voltage element (102) are interconnected in such a way that an absolute temperature can be determined.

3. Core temperature sensor (203) for food to be cooked, having at least one first thermoelectric voltage element (102) and one second thermoelectric voltage element (102), **characterised in that**
- the first thermoelectric voltage element (101) and the second thermoelectric voltage element (102) are electrically interconnected in antiparallel and
- an incorrect positioning of the core temperature sensor (203) can be detected from a relative level of an electrical voltage difference (ΔU) between the first thermoelectric voltage element (102) and the second thermoelectric voltage element (102).

4. Core temperature sensor (203) according to one of the preceding claims, **characterised in that** at least the electrical voltage difference (ΔU) can be compared with an adjustable comparison voltage (UC).

5. Core temperature sensor (203) according to one of the preceding claims, **characterised in that** the temperature difference (ΔT) between the first thermoelectric voltage element (102) and the second thermoelectric voltage element (102) can be determined from an electrical current flowing through the first thermoelectric voltage element (101) and/or the second thermoelectric voltage element (102).

6. Core temperature sensor (203) according to one of the preceding claims, **characterised in that** a comparator (308) is connected downstream of the thermoelectric voltage elements (101, 102).

7. Core temperature sensor (203) according to claim 6, **characterised in that** the comparator (308) is an operational amplifier.

8. Core temperature sensor (203) according to one of the preceding claims, **characterised in that** the first thermoelectric voltage element (101) is arranged in a region of a grip (204) of the core temperature sensor (203) and the second thermoelectric voltage element (102) is arranged in a region of a tip (205) of the core temperature sensor (203).

## Revendications

1. Capteur de température à coeur (203) pour des aliments à cuire, présentant au moins un premier élément de tension thermique (102) et un deuxième élément de tension thermique (102), **caractérisé en ce que**
- le premier élément de tension thermique (101) et le deuxième élément de tension thermique (102) sont couplés électriquement avec des polarités opposées et en série et
- un mauvais positionnement du capteur de température à coeur (203) peut être reconnu à partir d'une grandeur relative d'une différence de tension électrique (ΔU) entre le premier élément de tension thermique (102) et le deuxième élément de tension thermique (102).

2. Capteur de température à coeur (203) selon la revendication 1, **caractérisé en ce que** le premier élément de tension thermique (102) et le deuxième élément de tension thermique (102) sont couplés de sorte qu'une température absolue peut être déterminée.

3. Capteur de température à coeur (203) pour des aliments à cuire présentant au moins un premier élément de tension thermique (102) et un deuxième élément de tension thermique (102), **caractérisé en ce que**
- le premier élément de tension thermique (101) et le deuxième élément de tension thermique (102) sont couplés électriquement de manière antiparallèle et
- un mauvais positionnement du capteur de température à coeur (203) peut être reconnu à partir d'une grandeur relative d'une différence de tension électrique (ΔU) entre le premier élément de tension thermique (102) et le deuxième élément de tension thermique (102).

4. Capteur de température à coeur (203) selon l'une des revendications précédentes, **caractérisé en ce qu'**au moins la différence de tension électrique (ΔU) est comparable à une tension de comparaison ajustable (UC).

5. Capteur de température à coeur (203) selon l'une des revendications précédentes, **caractérisé en ce que** la différence de température (ΔT) entre le premier élément de tension thermique (102) et le deuxième élément de tension thermique (102) peut être déterminée à partir d'un courant électrique circulant à travers le premier élément de tension thermique (101) et/ou le deuxième élément de tension thermique (102).

6. Capteur de température à coeur (203) selon l'une des revendications précédentes, **caractérisé en ce que**, en aval des éléments de tension thermique (101, 102) est disposé un comparateur (308).

7. Capteur de température à coeur (203) selon la revendication 6, **caractérisé en ce que** le comparateur (308) est un amplificateur opérationnel.

8. Capteur de température à coeur (203) selon l'une des revendications précédentes, **caractérisé en ce que** le premier élément de tension thermique (101) est disposé dans une zone d'une surface de préhension (204) du capteur de température à coeur (203) et le deuxième élément de tension thermique (102) est disposé dans une zone d'un embout (205) du capteur de température à coeur (203).
